(19) Europäisches Patentamt
European Patent Office
Office européen des brevets

(11) **EP 1 516 507 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
***H04Q 7/38*** *(2006.01)*

(21) Anmeldenummer: **03761434.4**

(22) Anmeldetag: **25.06.2003**

(86) Internationale Anmeldenummer:
**PCT/DE2003/002121**

(87) Internationale Veröffentlichungsnummer:
**WO 2004/004393 (08.01.2004 Gazette 2004/02)**

(54) **VERFAHREN ZUR DURCHFÜHRUNG EINES BLIND HANDOVER BEI INTERSYSTEM- UND INTERFREQUENZ HANDOVER BEI MOBILKOMMUNIKATIONSSYSTEMEN**

METHOD FOR CARRYING OUT A BLIND HANDOVER IN AN INTERFREQUENCY HANDOVER IN MOBILE COMMUNICATION SYSTEMS

PROCEDE POUR EFFECTUER UN TRANSFERT AVEUGLE LORS D'UN TRANSFERT ENTRE SYSTEMES ET ENTRE FREQUENCES D'UN SYSTEME DE COMMUNICATION MOBILE

(84) Benannte Vertragsstaaten:
**AT BE BG CH CY CZ DE DK EE ES FI FR GB GR HU IE IT LI LU MC NL PT RO SE SI SK TR**

(30) Priorität: **27.06.2002 DE 10228885**

(43) Veröffentlichungstag der Anmeldung:
**23.03.2005 Patentblatt 2005/12**

(73) Patentinhaber: **T-Mobile Deutschland GmbH 53227 Bonn (DE)**

(72) Erfinder: **BRÜCKEN, Reinhold 50937 Köln (DE)**

(74) Vertreter: **Riebling, Peter Patentanwalt Postfach 31 60 88113 Lindau (DE)**

(56) Entgegenhaltungen:
**EP-A- 0 800 319       EP-A- 1 213 941
WO-A-00/28774       US-B1- 6 240 292**

• **"3rd Generation Partnership Project; Technical Specification Group Core Network; Handover procedures (Release 5)" 3GPP TS 23.009 V5.1.0, 1. Juni 2002 (2002-06-01), Seiten 38-55, XP002255099**

EP 1 516 507 B1

**Beschreibung**

Die Erfindung betrifft ein Verfahren zur Durchführung eines sogenannten "Blind Handover" bei einem Intersystem- und Interfrequenz Handover in Mobilkommunikationssystemen, insbesondere bei inhomogenen Netzstrukturen der beteiligten Mobilkommunikationssysteme.

Bei einem sogenannten Bind Handover (HO) kann bei Inhomogenität der verschiedenen Netzstrukturen, d.h. verschiedenen Frequenzlagen oder Versorgungsgebiete der beteiligten Netze, keine Garantie für die erfolgreiche Durchführung des HO gegeben werden.

Die zur Zeit gültige Spezifikation, z.B. offenbart in 3GPP TS 23.009 V5.1.0 (2002-06) "3rd Gerneration Partnership Project"; Technical Specification Group Core Network; Handover Procedures (Release 5), sieht vor, dass z.B. bei einem Handover zwischen einem UMTS Layer und einem GSM Layer pro UMTS-Zelle ein HO-Kandidat für ein Blind Handover konfiguriert werden kann. In diesem Fall wird vorausgesetzt, dass das Versorgungsgebiet der Zielzelle mit der Ursprungszelle übereinstimmt, d.h. die Versorgungsgebiete der jeweiligen Zelle des UMTS- und des GSM-Netzes am Ort des Handover deckungsgleich sind. Ansonsten ist die sich einstellende Situation nicht eindeutig. Die Folge wäre dann ein HO Fehler und somit das Risiko die Verbindung zu verlieren (Call Drop).

Um diese Probleme bei einem Blind Handover zu vermeiden, können sogenannte Dual-Mobilendgeräte, d.h. Mobiltelefone mit zwei getrennten Sende-/Empfangseinrichtungen, verwendet werden, die gleichzeitig auf zwei Frequenzen bzw. in zwei Mobilfunknetzen arbeiten können.

In WO 00 28774 A wird ein Verfahren zur Durchführung eines Intersystem- und Interfrequenz Handover innerhalb von CDMA-Netzen vorgeschlagen, bei dem eine Mobilstation von mehreren Basisstation mit Funksignalen versorgt wird, und mit Hilfe einer Datenbasis anhand des Aufenthaltsorts der Mobilstation mindestens eine geeignete Basisstation für den Intersystem- oder Interfrequenz Handover ausgewählt wird. Die für einen Handover benötigten Daten der ausgewählten Basisstation werden an die Mobilstation übermittelt, so dass die Mobilstation den Handover zur ausgewählten Basisstation durchführen kann. Die Mobilstation bestimmt ihren Aufenthaltsort mittels eines satellitengestützten GPS-Ortungssystems und/oder per Laufzeitmessung der Funksignale und überträgt die ermittelten Positionsdaten an das Mobilfunksystem. Nachteilig ist, dass die Mobilstationen zur Durchführung dieses Handover-Verfahrens vorzugsweise mit einem GPS-Ortungssystem ausgerüstet werden müssen, was zusätzliche Kosten verursacht und die Baugröße der Geräte erhöht.

Nicht Gegenstand des hier beschriebenen Verfahrens sind die während eines Handover ausgetauchten Signalisierungen zwischen Teilnehmerendgerät und den beteiligten Netzknoten, wie z.B. Basisstationen, RNC (Radio Network Controller) und Vermittlungsstellen (UMSC), der beteiligten Mobilkommunikationsnetze. Daher wird im weiteren darauf nicht näher eingegangen.

Die Aufgabe der Erfindung besteht darin, ein Verfahren anzugeben, mit dem auch Blind Handover ohne große Risiken zwischen verschiedenen Layern von Mobilkommunikationssystemen durchführbar sind, auch wenn diese keine gemeinsame Netzstruktur haben. Das Verfahren soll rein auf einer Laufzeitmessung der Funksignale zur Bestimmung des Aufenthaltsorts der Mobilstation basieren, so dass seitens der Mobilstationen keine zusätzliche Hardware notwendig wird.

Diese Aufgabe wird erfindungsgemäß durch die Merkmale des Patentanspruchs 1 gelöst.

Die Erfindung geht davon aus, dass eine Mobilstation vor dem Handover von mehreren Basisstation versorgt wird, d.h. neben der versorgenden Basisstation auch Signale von mehreren anderen Basisstation empfangen kann.

Erfindungsgemäß wird von der Mobilstation eine Laufzeitmessung der von den Basisstationen auf der Luftschnittstelle empfangenen Signale durchgeführt. Je nach den Pegelverhältnissen der Signale muss das Endgerät zwangsweise aufgefordert werden, diese Laufzeitmessung durchzuführen. Die gemessenen Laufzeiten werden an eine der Basisstationen übermittelt. Daraufhin wird seitens des Mobilkommunikationsnetzes anhand der übermittelten Laufzeitmessdaten der Aufenthaltsort der Mobilstation ermittelt. Mit Hilfe einer Datenbasis wird dann anhand des ermittelten Aufenthaltsorts mindestens eine geeignete Basisstation für einen Intersystem- oder Interfrequenz Handover ausgewählt, und die für einen Handover benötigten Daten der ausgewählten Basisstation an die Mobilstation übermittelt. Anhand dieser Informationen kann die Mobilstation den Handover zur ausgewählten Basisstation durchführen.

Mit diesem Verfahren besteht die Möglichkeit, mit einem weiter entwickelten Blind Handover, im weiteren auch bezeichnet als Blind Handover Advanced, solche HO zielsicher durchzuführen.

Durch das beschriebene Verfahren ergeben sich einige wichtige Vorteile:

- Im sogenannten UMTS Compressed Mode müssen erforderliche HO Messungen angestoßen werden, die je nach Situation und Anzahl der HO-Kandidaten mehrere GAP's (General Access Profile) erforderlich machen. Bei einem Blind HO gemäß der Erfindung wird keine Zeit verloren.

- Durch den Mechanismus des Compressed Mode (CM) wird zusätzliche Interferenz im Netz erzeugt. Dies bedeutet wiederum eine Reduzierung der Kapazität. Im Gegensatz dazu wird durch das beschriebene Verfahren eine Steigerung der Kapazität erreicht, da kein CM notwendig ist.

- Durch das Verfahren können ohne großen Mehraufwand andere Mobilfunkdienste implementiert werden, die eine Standortinformation des Teilnehmers benötigen.

- Das Verfahren funktioniert sowohl innerhalb als auch außerhalb von Gebäuden ohne zusätzliches GPS.

- Die Endgeräte müssen nicht mit GPS oder als Dual Endgeräte (mit zwei Sende-Empfangseinheiten) ausgestattet werden und können daher kostengünstiger produziert werden.

Vorteilhafte Ausgestaltungen und Weiterbildungen der Erfindung ergeben sich aus den Merkmalen der Unteransprüche.

Zur Ermittlung der Ortsinformation muss das Teilnehmerendgerät die Pegelverhältnisse in der eigenen Zelle und mindestens in einer oder zwei weiteren Zellen messen. Neben den Signalpegeln werden auch die Signallaufzeiten auf der Luftschnittstelle gemessen. Sollte dies durch die aktuellen Pegelverhältnisse der versorgenden Zelle eigentlich nicht erforderlich sein, so muss das Endgerät zwangsweise aufgefordert werden diese Messung durchzuführen. Dies kann z.B. dadurch geschehen, dass man dem Endgerät gezielt andere Versorgungspegel-Schwellenwerte mitteilt, die eine Messung erzwingen, oder dass man die Parameter des Netzes von vornherein so einstellt, dass diese Messungen obligatorisch durchgeführt werden.

Die so generierte Information über die Signallaufzeiten wird an das Netz übertragen. Um diese Information für einen Blind HO nutzen zu können, muss vorher der Layer, in dem sich die potentielle Zielzelle befindet nach der am besten versorgenden Basisstation, also dem Best Server, analysiert werden. Dies kann auf verschiedene Art und Weise geschehen. Zum einen kann das Versorgungsgebiet des Best Server mit entsprechenden Verfahren ermittelt werden und zum anderen kann dies aus zur Verfügung stehenden Messdaten geschehen. Die so erhaltenen Best Server können dann über die Polygon an jedem Punkt zugeordnet werden.

Die Koordinaten des Endgeräts werden dann mit der Best Server Datenbank verglichen und so die entsprechende Zielzelle ausgewählt. Diese Zielzelle wird dann per HO-Befehl an das Endgerät übertragen und damit gezielt der Blind Handover Advanced ausgeführt.

Ein Ausführungsbeispiel der Erfindung wird anhand der Zeichnungsfigur näher erläutert.

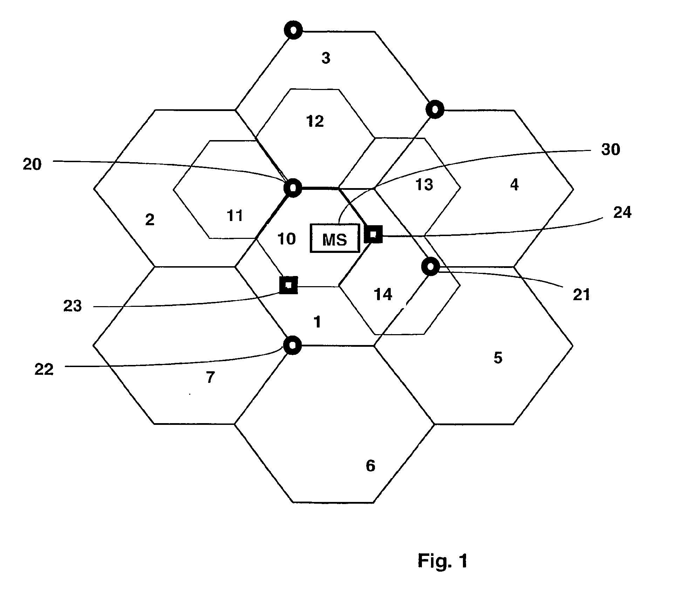

Figur 1 zeigt beispielhaft einen Ausschnitt der Zellstrukturen von zwei sich überlagernden Mobilkommunikationsnetzen, beispielsweise einem UMTS-Netz und einem GSM-Netz.

Das UMTS-Netz umfasst eine Vielzahl von Funkzellen 10-14, die von einer Vielzahl von fest installierten Basisstationen 20, 23, 24 mit Funksignalen versorgt werden. Gleichermaßen umfasst das GSM-Netz eine Vielzahl von Funkzellen 1-7, die von einer Vielzahl von fest installierten Basisstationen 20-22 mit Funksignalen versorgt werden.

Das UMTS und das GSM-Netz haben z.B. den Standort für die Basisstation 20 gemeinsam.

Eine Mobilstation 30 befindet sich innerhalb der UMTS-Zelle 10 und wird z.B. von der Basisstation 24 mit Funksignalen versorgt. Die Mobilstation 30 möchte einen Blind Handover in eine geeignete Funkzelle des GSM-Netzes durchführen.

Erfindungsgemäß muss hierfür zunächst der Aufenthaltsort der Mobilstation 30 bestimmt werden.

Durch eine geeignete Applikation wird das Endgerät aufgefordert, den Versorgungspegel und die Qualität der Basisstation 24 und der benachbarten UMTS-Basisstationen 20, 23 zu messen. Hierbei müssen vom Endgerät 30 die entsprechenden Basisstationen 20, 23, 24 eindeutig identifiziert und die dazugehörigen Laufzeiten der Signale auf der Luftschnittstelle ermittelt werden. Diese Informationen der Nachbarzellen und der eigenen Zelle werden als Informationspaket an eine Basisstation, z.B. 24, gesendet.

Aus nur zwei gemessenen Nachbarzellen und der eigenen Zelle kann im UMTS-Netz somit der Standort des Endgeräts 30 berechnet werden. Dieses Verfahren ist nicht davon abhängig, ob der Aufenthaltsort des Endgeräts innerhalb oder außerhalb eines Gebäudes ist.

Um den Aufenthaltsort eines Teilnehmerendgeräts ohne Kenntnis der Richtungsinformation zu bestimmen sind also mindestens drei Basisstationen 20, 23, 24 notwendig, deren Standort genau bekannt ist. Anhand der Laufzeitmessung der Signale zwischen dem Endgerät und jeder der Basisstationen können Kreisringe berechnet werden, die den Abstandsbereich des Endgeräts zur jeweiligen Basisstation definieren. Im Mittelpunkt jedes Kreisrings steht eine Basisstation. Der gemeinsame Schnittpunkt der drei Kreisringe ist der Aufenthaltsort des Endgeräts. Die Standorte der Basisstationen sind hierbei die Bezugspunkte, wobei die Standortkoordinaten aus der Standortdatenbank des Netzbetreibers zur Verfügung stehen.

In der Theorie schneiden sich drei Kreise in einem Punkt. Dies ist unter realen Bedingungen unmöglich, da das Laufzeitmessprinzip auf die Ausbreitungsbedingungen und die Verarbeitungsgeschwindigkeit der Signale im Mikrochip des Endgeräts (Chipfrequenz) angewiesen ist. Die Streckenabschnitte pro Messintervall können nicht beliebig klein sein.

Dies bedeutet in der Praxis, dass der Aufenthaltsort des Endgeräts durch eine Schnittfläche beschrieben ist. Dabei nimmt die Genauigkeit der Standortbestimmung mit der Anzahl der gemessenen Basisstationen zu.

Durch eine Chipfrequenz von beispielsweise 3,84 MHz berechnet sich das kleinste Messintervall a pro Chip zu

$$a = \text{Lichtgeschwindigkeit } C \text{ / Chipfrequenz } f_{Bit} = 300E6 \text{ / } 3,84E6 = 78 \text{ m}$$

Mit modernen Endgeräten sind in der Praxis sehr viel bessere Messgenauigkeiten zu erreichen.

Genauigkeit hängt auch vom Empfänger des Endgeräts ab. Der Empfänger muss Zeitintervalle innerhalb der Chipfrequenz auflösen können, um im 10 m Bereich Ergebnisse zu liefern. Die gemeinsame Schnittfläche der Kreise gibt das wahrscheinliche Aufenthaltsgebiet des Endgeräts an.

Da das Endgerät keine Informationen über die Rahmensynchronität der beteiligten Basisstationen besitzt, wird der ermittelte Aufenthaltsort des Endgeräts mit zusätzlichen Messfehlern behaftet sein.

Um dies zu umgehen bieten sich in der Hauptsache zwei Möglichkeiten an:

- Die Basisstationen werden über eine Zentrale Uhr oder via GPS Zeit synchronisiert.
- Durch Messungen seitens der Basisstationen wird das Maß der Asynchronität zu anderen Basisstationen festgestellt und in einer Matrix abgelegt.

Anhand des ermittelten Aufenthaltsorts der Mobilstation 30 wird mit Hilfe einer im Mobilkommunikationsnetz vorhandenen Datenbasis die für einen Handover am besten geeignete Funkzelle bzw. Basisstation des GSM-Netzes ermittelt. In Figur 1 ist dies z.B. die GSM-Basisstation 20, die u.a. die GSM-Funkzelle 1 versorgt.

Damit die Mobilstation 30 auch einen HO zu der entsprechenden GSM-Zielzelle 1 vollzieht, muss sie nach der Auswertung der Ortsinformation (Messwerte) des Endgeräts die Zielzelle bzw. die entsprechende Basisstation 20 mitgeteilt bekommen. Dies kann direkt in Form eines HO-Befehls an die Mobilstation durchgeführt werden.

Daraus ergibt sich, dass die Funktionalität des entsprechenden Netzknotens, z.B. RNC, dahingehend erweitert werden muss, dass die Auswertung der Messdaten eine Ortsinformation ergibt, daraus aus einer Best Server Datenbank die bestversorgende Basisstation der Zielzelle ermittelt und dem am Handover beteiligten Endgerät und den Basisstationen zur Verfügung gestellt wird.

**Patentansprüche**

1. Verfahren zur Durchführung eines Blind Handover bei einem Intersystem- und Interfrequenz Handover in Mobilkommunikationssystemen, wobei eine Mobilstation (30) von mehreren Basisstation (23, 24) mit Funksignalen versorgt wird, und mit Hilfe einer Datenbasis anhand des Aufenthaltsorts der Mobilstation (30) mindestens eine geeignete Basisstation (20) für einen Intersystem- oder Interfrequenz Handover ausgewählt wird, wobei die für den Handover benötigten Daten der ausgewählten Basisstation (20) an die Mobilstation übermittelt werden, und die Mobilstation (30) den Handover zur ausgewählten Basisstation (20) durchführt, wobei von der Mobilstation (30) eine Laufzeitmessung der von den Basisstationen (23, 24) auf der Luftschnittstelle empfangenen Signale sowie eine Messung der Signalstärken und /oder der Signalqualitäten der Basisstationen (23, 24) durchgeführt wird, dass die gemessenen Laufzeiten, Signalstärken und/oder Signalqualitäten an eine der Basisstationen (23, 24) übermittelt werden, und dass seitens des Mobilkommunikationsnetzes anhand der Laufzeitmessdaten der Aufenthaltsort der Mobilstation (30) ermittelt wird, **dadurch gekennzeichnet, dass** das Endgerät zwangsweise aufgefordert wird eine Laufzeitmessung durchzuführen, indem dem Endgerät gezielt andere Versorgungspegel-Schwellenwerte mitteilt werden, die eine Messung erzwingen, oder indem die Parameter des Netzes von vornherein so einstellt werden, dass diese Messungen obligatorisch durchgeführt werden, und **dass** die Mobilstation (30) beim Handover von einer Basisstation (24) eines ersten UMTS-Mobilkommunikationssystems zu einer Basisstation (20) eines zweiten GSM-Mobilkommunikationssystems wechselt.

2. Verfahren nach Anspruch 1, **dadurch gekennzeichnet, dass** die Mobilstation (30) beim Handover die verwendeten Funkfrequenzen wechselt.

3. Verfahren nach einem der Ansprüche 1 oder 2, **dadurch gekennzeichnet, dass** sich der Versorgungsbereich der die Mobilstation vor dem Handover versorgenden Basisstation (24) vom Versorgungsbereich der die Mobilstation nach dem Handover versorgenden Basisstation (20) unterscheidet.

**4.** Verfahren nach einem der Ansprüche 1 bis 3, **dadurch gekennzeichnet, dass** sich der Versorgungsbereich der die Mobilstation vor dem Handover versorgenden Basisstation (24) mit dem Versorgungsbereich der die Mobilstation nach dem Handover versorgenden Basisstation (20) überschneidet.

**5.** Verfahren nach einem der Ansprüche 1 bis 4, **dadurch gekennzeichnet, dass** der genaue Aufenthaltsort der Mobilstation (30) mittels eines GPS-Empfängers bestimmt wird.

**6.** Verfahren nach einem der Ansprüche 1 bis 5, **dadurch gekennzeichnet, dass** mittels einer zentralen Uhr eine Rahmensynchronisation zwischen den - beteiligten Basisstationen (23, 24) durchgeführt wirt.

**7.** Verfahren nach einem der Ansprüche 1 bis 6, **dadurch gekennzeichnet, dass** Abweichungen der Rahmensynchronisation zwischen den Basisstationen (23, 24) ermittelt, in einer Matrix abgespeichert und zur Berechnung des Aufenthaltsorts der Mobilstation (30) verwendet werden.

## Claims

**1.** Method for carrying out a blind handover in an intersystem and interfrequency handover in mobile communications systems, wherein a mobile station (30) is supplied with radio signals by a plurality of base stations (23, 24) and with the aid of a database at least one suitable base station (20) for an intersystem or interfrequency handover is selected on the basis of the location of the mobile station (30), wherein the data of the selected base station (20) needed for the handover are transmitted to the mobile station and the mobile station (30) carries out the handover to the selected base station (30), wherein a transit time measurement of the signals received from the base stations (23, 24) on the air interface as well as a measurement of the signal strengths and/or signal qualities of the base stations (23, 24) is carried out by the mobile station (30), that the measured transit times, signal strengths and/or signal qualities are transmitted to one of the base stations (23, 24) and that on the part of the mobile communications network the location of the mobile station (30) is determined on the basis of the measured transit time data, **characterised in that** the terminal device is compulsorily called upon to carry out a transit time measurement **in that** different coverage level threshold values are selectively communicated to the terminal device which force a measurement or **in that** the parameters of the network are set in such a way from the outset that these measurements are carried out obligatorily and that the mobile station (30) in the course of handover changes from a base station (24) of a first UMTS mobile communications system to a base station (20) of a second GSM mobile communications system.

**2.** Method according to claim 1, **characterised in that** the mobile station (30) during handover changes the radio frequency used.

**3.** Method according to one of claims 1 or 2, **characterised in that** the coverage area of the base station (24) supplying the mobile station prior to the handover differs from the coverage area of the base station (20) supplying the mobile station after the handover.

**4.** Method according to any of claims 1 to 3, **characterised in that** the coverage area of the base station (24) supplying the mobile station prior to the handover overlaps with the coverage area of the base station (20) supplying the mobile station after the handover.

**5.** Method according to any of claims 1 to 4, **characterised in that** the exact location of the mobile station (30) is determined by means of a GPS receiver.

**6.** Method according to any of claims 1 to 5, **characterised in that** frame synchronisation between the participating base stations (23, 24) is carried out by means of a central clock.

**7.** Method according to any of claims 1 to 6, **characterised in that** deviations in frame synchronisation between the base stations (23, 24) are determined, stored in a matrix and used for calculating the location of the mobile station (30).

**EP 1 516 507 B1**

**Revendications**

1. Procédé pour effectuer un transfert aveugle lors d'un transfert entre systèmes et entre fréquences dans des systèmes de communication mobile, selon lequel une station mobile (30) est alimentée en signaux radio par plusieurs stations de base (23, 24), et à l'aide d'une base de données et grâce à la position de la station mobile (30) au moins une station de base appropriée (20) est sélectionnée pour un transfert entre systèmes ou entre fréquences, les données de la station de base (20) sélectionnée qui sont nécessaires au transfert sont transmises à la station mobile et la station mobile (30) effectue le transfert vers la station de base (20) sélectionnée, la station mobile (30) effectue une mesure de la durée de propagation des signaux reçus des stations de base (23, 24) sur l'interface air ainsi qu'une mesure des intensités de signaux et/ou des qualités de signaux des stations de base (23, 24),
les durées de propagation, intensités et/ou qualités de signaux mesurées sont transmises à l'une des stations mobiles (23, 24), et
la position de la station mobile (30) est déterminée du côté du réseau de communication mobile à l'aide des données de mesure de durée de propagation,
**caractérisé en ce que** le terminal est obligatoirement invité à effectuer une mesure de durée de propagation grâce au fait que d'autres valeurs seuils de niveau d'alimentation qui provoquent une mesure sont communiquées de manière ciblée au terminal ou que les paramètres du réseau sont réglés dès le départ de telle sorte que ces mesures soient effectuées obligatoirement,
et **en ce que** la station mobile (30), lors du transfert, passe d'une station de base (24) d'un premier système de communication mobile UMTS à une station de base (20) d'un second système de communication mobile GSM.

2. Procédé selon la revendication 1, **caractérisé en ce que** la station mobile (30), lors du transfert, change de fréquence radio utilisée.

3. Procédé selon la revendication 1 ou 2, **caractérisé en ce que** la zone d'alimentation de la station de base (24) qui alimente la station mobile avant le transfert est différente de celle de la station de base (20) qui alimente la station mobile après le transfert.

4. Procédé selon l'une des revendications 1 à 3, **caractérisé en ce que** la zone d'alimentation de la station de base (24) qui alimente la station mobile avant le transfert chevauche celle de la station de base (20) qui alimente la station mobile après le transfert.

5. Procédé selon l'une des revendications 1 à 4, **caractérisé en ce que** la position exacte de la station mobile (30) est définie à l'aide d'un récepteur GPS.

6. Procédé selon l'une des revendications 1 à 5, **caractérisé en ce qu'**une synchronisation de trame est effectuée entre les stations de base impliquées (23, 24), à l'aide d'une horloge centrale.

7. Procédé selon l'une des revendications 1 à 6, **caractérisé en ce que** les écarts de synchronisation de trame entre les stations de base (23, 24) sont déterminés, mis en mémoire dans une matrice et utilisés pour calculer la position de la station mobile (30).

**Fig. 1**

**EP 1 516 507 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0028774 A